# EUROPÄISCHE PATENTSCHRIFT

(11) **EP 3 930 263 B1**
(45) Veröffentlichungstag und Bekanntmachung des Hinweises auf die Patenterteilung: **01.03.2023**
(21) Anmeldenummer: 21159580.6
(22) Anmeldetag: 26.02.2021
(51) Int. Cl.: H04L 12/28

(54) **VERFAHREN ZUM ÜBERTRAGEN VON DATEN INNERHALB EINES ZUMINDEST TEILWEISE FUNKBASIERTEN GEBÄUDEINSTALLATIONSSYSTEMS SOWIE GEBÄUDEINSTALLATIONSSYSTEM**
BUILDING INSTALLATION SYSTEM AND METHOD FOR TRANSMITTING DATA WITHIN AN AT LEAST PARTIALLY RADIO-BASED BUILDING INSTALLATION SYSTEM
PROCÉDÉ DE TRANSFERT DE DONNÉES DANS UN SYSTÈME D'INSTALLATION DE BÂTIMENT AU MOINS PARTIELLEMENT RADIO, AINSI QUE SYSTÈME D'INSTALLATION DE BÂTIMENT

(30) Priorität: 23.06.2020 DE 102020116492
(43) Veröffentlichungstag der Anmeldung: 29.12.2021
(73) Patentinhaber: Insta GmbH, 58509 Lüdenscheid (DE)
(72) Erfinder: Reth, Karsten, 58300 Wetter (DE); Rosemann, Peter, 58091 Hagen (DE); Stecura, Darius, 45731 Waltrop (DE)

(56) Entgegenhaltungen:
- EP-A1- 2 227 065
- US-A1- 2014 105 063
- KHALED ABDELFADEEL ET AL: "How to make Firmware Updates over LoRaWAN Possible", ARXIV.ORG, CORNELL UNIVERSITY LIBRARY, 201 OLIN LIBRARY CORNELL UNIVERSITY ITHACA, NY 14853, 20. Februar 2020 (2020-02-20), XP081604226,

## Beschreibung

Die Erfindung betrifft ein Verfahren zum Übertragen von nicht zu einem Normalbetrieb gehörenden Daten innerhalb eines zumindest teilweise funkbasierten Gebäudeinstallationssystems außerhalb eines Normalbetriebes, bei dem wenigstens ein Teilnehmer über eine funkbasierte Netzkommunikation in das Gebäudeinstallationssystem eingebunden ist. Beschrieben ist des Weiteren ein Gebäudeinstallationssystem mit zumindest teilweise funkbasierter Kommunikation.

Gebäudeinstallationssysteme dienen dem Zweck, unterschiedliche Installationen, wie Beleuchtung, Heizung, Belüftung und dergleichen datentechnisch miteinander zu vernetzen und je nach Auslegung des Systems unter Umständen auch mit der notwendigen Betriebsspannung zu versorgen. Die datentechnische Kommunikation wird typischerweise über ein Bussystem realisiert, an das die einzelnen Aktoren und/oder Sensoren der unterschiedlichen Installationen als Busteilnehmer angeschlossen sind. Ein solches Bussystem kann als Netzwerk angesprochen werden, bei dem eine Kommunikation über einen Installationsbus durch verschiedene Netzknoten erfolgt. Aufgrund der räumlich verteilten Anordnung der Teilnehmer werden derartige Gebäudeinstallationssysteme auch als verteilte Gebäudeinstallationssysteme bezeichnet.

Von einem solchen Busteilnehmer eines Gebäudeinstallationssystems werden typischerweise ein oder mehrere Aktoren angesteuert und/oder ein oder mehrere Sensoren ausgelesen. Teil eines solchen Gebäudeinstallationssystems ist zudem eine Steuereinheit, über die die Buskommunikation gesteuert wird. Derartige Gebäudeinstallationssysteme kommunizieren beispielsweise nach dem KNX-Standard.

Die Kommunikation in einem solchen Gebäudeinstallationssystem erfolgt drahtgebunden oder auf einer Funkstrecke. In vielen Fällen werden in einem Gebäudeinstallationssystem beide Übertragungsstrecken eingesetzt. Bei einer funkbasierten Übertragung ist es mitunter erforderlich, zwischen zwei Netzteilnehmern ein oder mehrere Repeater zur Weiterleitung der Kommunikation und damit der Datentelegramme über weitere Strecken einzuschalten, um Daten zwischen zwei Netzteilnehmern übertragen zu können. Dies ist beispielsweise dann der Fall, wenn ein oder mehrere funkbasierte Endgeräte als Netzteilnehmer in größerer Entfernung zu einem Medienkoppler (Gateway) positioniert sind und eine direkte Funkübertragung zwischen dem Gateway und dem zumindest einen Endgerät, beispielsweise aufgrund baulicher Gegebenheiten, gestört, unterbrochen oder nicht möglich ist. In einem solchen Fall ist dieses Endgerät über eine Funkstrecke an die Netzkommunikation angeschlossen. Gleiches gilt auch für eine Ausgestaltung, bei der das Endgerät zwar drahtgebunden an die Netzkommunikation angeschlossen ist, jedoch in die Übertragungsstrecke von einem ersten Netzteilnehmer, etwa einem Verwaltungsgerät, an dieses Endgerät eine Funkstrecke eingeschaltet ist.

Aufgrund der gesetzlichen Anforderungen, welche in der Norm ETSI EN 300 220 beschrieben sind, ist in den für diese Zwecke genutzten Frequenzbändern die maximale Sendezeit eines jeden Gerätes begrenzt. In dem Frequenzband von 868,3 MHz, beträgt die maximale Sendezeit eines jeden Gerätes 1 % einer Stunde (36 Sekunden pro Stunde). Diese maximal zulässige Sendezeit eines jeden Gerätes wird als Duty-Cycle angesprochen. Das Limit eines solchen Duty-Cycles ist ausgelegt, damit bei einem Normalbetrieb eines solchen Gebäudeinstallationssystems die maximal zulässige Sendezeit eines jeden Gerätes nicht erreicht wird, mithin die Netzwerk-Kommunikation in einem Normalbetrieb ohne Weiteres durchgeführt werden kann. Der Begriff "Duty-Cycle" wird im Rahmen dieser Ausführungen für die kumulative Zeitspanne, die ein Netzwerkteilnehmer innerhalb einer vorgegebenen Zeiteinheit senden darf, verwendet. Anders stellt sich die Situation jedoch dar, wenn an einem solchen Endgerät Wartungs- oder Diagnosearbeiten vorgenommen werden sollen, bei der Inbetriebnahme, beim Installieren eines Updates oder auch bei Sonderfallinstallationen. Diese Aufzählung ist beispielhaft und nicht abschließend. Bei derartigen Prozeduren ist es mitunter erforderlich, dass größere Datenmengen übertragen werden, auch solche, deren Übertragungsdauer den zulässigen Duty-Cycle eines Senders überschreiten. Die Folge ist, dass die Sendevorgänge erheblich verzögert würden. Die Bearbeitungsdauer ist dann entsprechend lang, da nach Übertragen eines Datenpaketes und Erreichen des Duty-Cycles zunächst gewartet werden muss, bis derselbe Sender das nächste Datenpaket senden darf und kann. Um dieses zu umgehen, kann man sich dadurch behelfen, dass diese Endgeräte vor Ort bearbeitet werden. Dieses bedeutet jedoch, dass die diese Arbeiten vornehmende Person zu dem Endgerät gelangen können muss, um diese Arbeiten vor Ort drahtgebunden durchführen zu können. Mitunter sind derartige Endgeräte jedoch nur schwer zugänglich. Überdies ist diese Maßnahme nicht praktikabel, wenn in dem Gebäudeinstallationssystem eine Vielzahl derartiger Endgeräte eingebunden sind.

Die vorstehend angesprochenen Arbeiten, die die Übertragung einer größeren Datenmenge zu Folge haben, werden nur von entsprechend geschultem Personal vorgenommen. Hierbei handelt es sich häufig um externes Personal, dem auch der physische Zugang von nur über die Funkstrecke erreichbaren Endgeräten nicht unbedingt gewährt werden soll. Diese Arbeiten werden daher in der Regel zentral von einem Verwaltungsgerät aus vorgenommen, beispielsweise mittels eines von der diese Arbeiten vornehmenden Person mitgebrachten PCs, der an das Gebäudeinstallationssystem für diese Zwecke angeschlossen wird. Die durchzuführenden Arbeiten werden mit einer entsprechenden Inbetriebnahme- bzw. Installationssoftware durchgeführt.

Um derartige Wartungs- oder Diagnosearbeiten auch funkbasiert sinnvoll durchführen zu können, sieht die Norm ETSI EN 300 220 Ausnahmen für derartige Zwecke vor. Den beteiligten Endgeräten, also einem Verwaltungsgerät, von dem derartige Arbeiten initialisiert werden, und dem verwalteten Endgerät, ist der Inhalt und der Zusammenhang der Kommunikation bekannt. Somit können diese Endgeräte eine zulässige Ausnahme für den maximalen Duty-Cycle erkennen und die entsprechende Sendezeitlimitierung entsprechend nicht anwenden. Für in die Übertragungsstrecke eingebundene Übertragungsgeräte, wie Repeater, Medienkoppler und dergleichen sind die Wartungs- oder Diagnosearbeiten hingegen nicht bekannt und auch nicht erkennbar, da die Kommunikation womöglich auch verschlüsselt erfolgt. Wenn die Wartungs- oder Diagnosearbeiten zum Erreichen des zumindest einen Endgerätes nur über derartige Übertragungsgeräte möglich ist, wird diese also auf den vorgegebenen maximalen Duty-Cycle begrenzt.

EP 2 227 065 A1 offenbart ein Verfahren zum Übermitteln von Sensordaten in einem Nahbereichsfunknetzwerk, wie dieses beispielsweise im Zusammenhang mit einer Übermittlung von Daten bei der Überwachung eines Patienten im Krankenhaus benötigt wird. Um die Lebensdauer der mit Batterienstrom versorgten Sensoren zu verlängern, werden die Sensoren gemäß einem von einem Verwaltungsgerät vorgegebenen Takt in einen Ruhemodus geschaltet. Gesendet werden Daten von dem Sensor, wenn sich der Sensor in seinem Betriebsmodus und nicht in seinem Ruhemodus befindet. Der Wechsel zwischen diesen beiden Betriebsmodi wird durch das Verwaltungsgerät gesteuert, und zwar in Abhängigkeit von der Menge der erhaltenen Daten. Dieses wird vorgenommen, damit umfangreichere Datenmengen nicht in mehreren oder einer Vielzahl von einzelnen Datensegmenten von dem Sensor an das Verwaltungsgerät gesendet werden müssen.

US 2014/0105063 A1 offenbart vom Prinzip her ein ähnliches Verfahren wie EP 2 227 065 A1. Auch bei diesem vorbekannten Verfahren wird der Duty- Cycle in Abhängigkeit von den zu übermittelnden Daten von einem Verwaltungsgerät überwacht.

KHALED ABDELFADEEL ET AL: "How to make Firmware Updates over LoRaWAN Possible", ARXIV.ORG, CORNELL UNIVERSITY LIBRARY, 201 OLIN LIBRARY CORNELL UNIVERSITY ITHACA, NY 14853, 20. Februar 2020 (20-02-2020), XP081604226 offenbart ein Verfahren, wie Softwarupdates in einem Long Rage Wide Area Network (LoRaWAN) übertragen werden können. Bei dieser Spezifikation handelt es sich um in einem Netzwerk organisierte drahtlos batteriebetriebene Geräte und um deren Verbindung mit dem Internet. Der Betrieb eines solchen Netzwerkes ist nicht für die Übermittlung von größeren Datenmengen ausgelegt. Übertragen werden gemäß diesem Protokoll nur kleine Datenmengen. Für das Senden existieren Duty-Cycle Beschränkungen, die einzuhalten sind. Vorgestellt werden in diesem Aufsatz verschiedene Verfahren, um trotz der Einhaltung der Duty-Cycle Anforderungen dennoch größere Datenmengen, wie beispielsweise im Zusammenhang mit einem Firmware-Update erforderlich, an die Teilnehmer zu übersenden.

Ausgehend von diesem diskutierten Stand der Technik liegt der Erfindung die Aufgabe zu Grunde, ein Verfahren zum Übertragen von nicht zu einem Normalbetrieb gehörenden Daten innerhalb eines zumindest teilweise funkbasierten Gebäudeinstallationssystems vorzuschlagen, bei dem wenigstens ein Teilnehmer über die funkbasierte Netzkommunikation in das Gebäudeinstallationssystem eingebunden ist, insbesondere um die vorstehend genannten Arbeiten zu vereinfachen.

Gelöst wird diese Aufgabe erfindungsgemäß zum einen durch ein eingangs genanntes, gattungsgemäßes Verfahren, bei dem ein über eine Funkstrecke des Gebäudeinstallationssystems von einem Verwaltungsgerät angesprochener Teilnehmer als Endgerät nach Empfang eines Sonderbetriebsbefehls, wenn nicht über eine Funkstrecke an die Netzkommunikation angeschlossen, ein Telegramm mit der Information über den Sonderbetrieb sendet, woraufhin das oder die dieses Telegramm empfangenden, an der Funkübertragung an das zumindest eine Endgerät beteiligten Übertragungsgeräte, wie Repeater, Medienkoppler und dergleichen ihre Duty-Cycle-Überwachung deaktivieren, und, wenn funkbasiert an die Netzkommunikation angeschlossen, dieses Endgerät zudem seine Duty-Cycle-Überwachung deaktiviert, sodass eine Übertragung auch größerer Datenmengen an dieses zumindest eine Endgerät auf der Funkstrecke unterbrechungsfrei erfolgen kann.

Gelöst wird diese Aufgabe erfindungsgemäß zum anderen durch ein eingangs genanntes, gattungsgemäßes Verfahren, bei dem ein oder mehrere oder alle an der Funkübertragung an das zumindest eine die funkbasierende Netzkommunikation als Teilnehmer in das Gebäudeinstallationssystem eingebundene Endgerät beteiligten Übertragungsgeräte, wie Repeater, Medienkoppler und dergleichen ihre Duty-Cycle-Überwachung deaktivieren, wenn sich aus einem oder mehreren zusammenhängenden, weiterzuleitenden Datentelegrammen ergibt, dass es sich um einen Sonderbetriebsbefehle handelt.

Wenn im Rahmen dieser Ausführungen von einem Endgerät die Rede ist, handelt es sich um ein Gerät, welches durch ein Verwaltungsgerät im Rahmen eines Sonderbetriebes beeinflusst werden soll, mithin um ein solches Gerät, an dem beispielsweise Wartungs- oder Diagnosearbeiten vorgenommen werden sollen oder Updates oder andere Software übertragen werden soll, nur um einige mögliche Arbeiten im Sonderbetrieb des Netzwerkes zu benennen.

Geräte, die in die Übertragung von Telegrammen zu einem Endgerät eingeschaltet sind, sind im Rahmen dieser Ausführungen als Übertragungsgeräte angesprochen. Hierbei kann es sich beispielsweise um Repeater, Medienkoppler oder dergleichen handeln.

Bei diesem Verfahren macht man sich den Umstand zu Nutze, dass die Duty-Cycle-Überwachung von in einem solchen Gebäudeinstallationssystem integrierten Sendegeräten deaktiviert werden kann. Hierbei kann es sich um Übertragungsgeräte, wie Medienkoppler, um Repeater und/oder ein Endgerät handeln, welches von einem Verwaltungsgerät angesprochen ist. Das Endgerät, sei es, dass dieses über eine Funkstrecke oder drahtgebunden an die Netzkommunikation angeschlossen ist, erkennt anhand des empfangenen Telegramms (Befehls), dass dieses kein Telegramm eines Normalbetriebes ist. Dieses ist bei Übertragungsgeräten, wie Medienkopplern und Repeatern, in aller Regel anders, da diese empfangene Daten (Telegramme) nur weiterleiten und grundsätzlich, vor allem wenn die Telegramme verschlüsselt sind, keinen Zugang zu dem Inhalt derselben haben. Bei dem Verfahren gemäß dem ersten Lösungsvorschlag sendet nur dasjenige Endgerät im Wege eines Broadcast ein Telegramm, um das oder die in die Funkstrecke eingebundenen Übertragungsgeräte über den geänderten Betriebszustand (Sonderbetriebsmodus), beispielsweise über durchzuführende Wartungs- oder Diagnosearbeiten zu informieren. Empfängt ein solches Übertragungsgerät, beispielsweise ein Repeater und/oder ein Medienkoppler dieses Telegramm von einem Endgerät, wird durch dieses ihr Duty-Cycle deaktiviert. Infolge des als Broadcast von dem Endgerät gesendeten Telegramms sendet jedes Übertragungsgerät, welches in diese Kommunikation eingeschaltet ist, diesen Befehl weiter. Daher vollzieht sich in dem einen oder in den mehreren weiteren, unter Umständen in die Funkstrecke zu diesem Endgerät hin eingeschalteten Übertragungsgeräten, wie Repeatern, Medienkopplern (Gateways) oder dergleichen, Gleiches. Ist die Duty-Cycle-Überwachung des oder der in die Funkstrecke zu dem zumindest einen Endgerät eingeschalteten Übertragungsgeräte deaktiviert, können ohne weiteres unterbrechungsfrei größere Datenmengen übertragen werden, insbesondere auch solche, die sich ansonsten innerhalb des für einen Normalbetrieb zugelassenen Duty-Cycles nicht in einem nicht unterbrochenen Übermittlungsvorgang übertragen lassen würden. Dieses erleichtert in hohem Maße die Inbetriebnahme des einen oder der mehreren, über eine Funkstrecke zu erreichenden Endgeräte ebenso wie die Übertragung von Updates, Sonderfallinstallationen oder die Durchführung von Wartungs- und/oder Diagnosearbeiten an diesem oder an diesen Endgeräten.

Wenn das Endgerät über die Funkstrecke an die Netzkommunikation angeschlossen ist, deaktiviert dieses zusätzlich zu dem Senden des Telegramms über den geänderten Betriebszustand seine eigene Duty-Cycle-Überwachung.

Das Absetzen des Informationstelegramms mit der Information über den Sonderbetrieb wird auch von dem den Sonderbetriebsbefehl gesendeten Verwaltungsgerät empfangen und kann somit als Empfangsbestätigungssignal gewertet werden.

Ergänzend oder auch unabhängig von dem Vorstehenden kann ein Übertragungsgerät auch von selbst seine Duty-Cycle-Überwachung deaktivieren und somit in seinen Sonderbetriebsmodus geschaltet werden, und zwar dadurch, dass das Übertragungsgerät aus einem oder mehreren zusammenhängenden Telegrammen ableitet, dass es sich hierbei um Telegramme im Rahmen eines Sonderbetriebs handelt. Dieses ist der Fall bei dem zweiten Lösungsvorschlag. Für den Fall unverschlüsselter Telegramme ist ein Sonderbetrieb anhand besonderer Befehlstelegramme erkennbar. Auch bei verschlüsselten Telegrammen ist für das Übertragungsgerät erkennbar - dann mittelbar-, dass weitergeleitete Telegramme nicht zu einem Normalbetrieb des Gebäudeinstallationssystems gehören, beispielsweise durch die für einen Sonderbetrieb typischerweise hohe übertragene Datenmenge, die selbst den zulässigen Duty-Cycle überschreitet. Erkennbar kann für ein solches Übertragungsgerät ein Sonderbetrieb auch dadurch sein, dass ein von einem Endgerät gesendetes Datentelegramm länger ist als solche, die für den Normalbetrieb verwendet werden. Dieses ist für das Übertragungsgerät ein deutlicher Hinweis, dass sich das Endgerät in einem Sonderbetriebsmodus mit deaktiviertem Duty-Cycle befindet. Folglich schaltet dann auch das Übertragungsgerät in den Sonderbetrieb mit deaktiviertem Duty-Cycle um.

Dass von einem Verwaltungsgerät ein Sonderbetrieb gewünscht wird, kann von einem Übertragungsgerät beispielsweise auch dadurch erkannt werden, dass eine starke Häufung von Daten mit Punkt-zu-Punkt-Adressierung auftritt.

Vorstehend sind lediglich Beispiele angegeben, auf welche Weise ein solches Übertragungsgerät anhand des oder der mehreren zusammenhängenden, von ihm weitergeleiteten Telegrammen erkennen kann, ob dieses oder diese Telegramme einem Normalbetrieb oder einem Sonderbetrieb zugehörig ist. Diese Maßnahmen können auch kombiniert werden. Selbstverständlich können auch andere Kriterien des weitergeleiteten Telegramms oder dessen Inhaltes für die vorgenannten Zwecke genutzt werden.

Zum Gewährleisten, dass das oder die in die Funkstrecke zu dem zumindest einen Endgerät eingeschalteten Übertragungsgeräte das als Broadcast gesendete Telegramm mit der Information über den Sonderbetrieb erhalten haben, sendet gemäß einer Weiterbildung das Endgerät diesen Befehl wiederholend aus, und die dieses Telegramm empfangenden Übertragungsgeräte deaktivieren ihren Duty-Cycle jeweils für eine Zeitspanne. Nach Ablauf der vorgegebenen Zeitspanne wird der Duty-Cycle in einem solchen Übertragungsgerät wieder aktiviert. Diese Zeitspanne kann durch einen in dem Übertragungsgerät gestarteten Timer überwacht werden, der mit dem Empfang eines solchen Telegramms gesetzt wird. Bei einem wiederholten Senden dieses Telegramms durch das Endgerät wird bei jedem Empfang der Timer neu gestartet. Dann kann die Deaktivierungszeit entsprechend kürzer bemessen sein.

Möglich ist es auch, dass nach Abschluss der Datenübertragung zu und/oder von dem Endgerät das Endgerät wiederum als Broadcast ein Telegramm mit der Information über die Beendigung des Sonderbetriebs, also beispielsweise der Wartungs- oder Diagnosearbeiten sendet, woraufhin das oder die dieses Telegramm empfangenden Übertragungsgeräte, wie Repeater und/oder Medienkoppler ihren Duty-Cycle wieder aktivieren. Auch dieses Telegramm kann ein- oder mehrfach, typischerweise in relativ kurzem Abstand, wiederholt gesendet werden, um sicherzugehen, dass die Übertragungsgeräte diesen Befehl erhalten haben. In jedem Fall wird es als zweckmäßig angesehen, wenn auch bei einem solchen Betrieb eines Gebäudeinstallationssystems nach einer vorgegebenen Time-Out-Zeitspanne die Übertragungsgeräte aus ihrem "Duty-Cycle-Aus"-Zustand wieder in ihren "Duty-Cycle-Ein"-Zustand geschaltet werden.

Für einen bestimmungsgemäßen Betrieb des Gebäudeinstallationssystems ist es sinnvoll, dass jedes Endgerät die Programmiervorgänge im Sonderbetrieb vollständig abgeschlossen hat. Grundsätzlich wird dieses von dem Verwaltungsgerät nachverfolgt. Dennoch ist nicht auszuschließen, dass einzelne Geräte aufgrund beispielsweise einer Fehlfunktion oder auch aufgrund eines anderweitigen Eingriffs, wie etwa einer manuellen Löschbetätigung nicht vollständig durch den Sonderbetrieb programmiert sind. Um diesbezüglich Abhilfe zu schaffen, sendet ein solches Endgerät bei unvollständiger Programmierung durch Fortbestehen des Sonderbetriebs mit deaktivierter Duty-Cycle-Überwachung weiterhin Telegramme mit der Information über den Sonderbetrieb. Empfängt das Verwaltungsgerät ein solches Telegramm, kann von diesem automatisch oder halbautomatisch eine Fehlerbehebung dieses Endgerätes angestoßen werden.

Die Erfindung ist nachfolgend anhand eines Ausführungsbeispiels unter Bezugnahme auf die beigefügten Figuren beschrieben. Es zeigen:
- **Fig. 1:**: eine schematisierte Darstellung eines Gebäudeinstallationssystems,
- **Fig. 2:**: eine Detaildarstellung eines in dem Gebäudeinstallationssystem der Figur 1 integrierten, nur auf einer Funkstrecke erreichbaren Endgerätes,
- **Fig. 3:**: einen in das Gebäudeinstallationssystem der Figur 1 in die Funkstrecke zu dem Endgerät der Figur 2 integrierter Repeater,
- **Fig. 4:**: das Gebäudeinstallationssystem der Figur 1 bei einem Normalbetrieb und
- **Fig. 5:**: das Gebäudeinstallationssystem der Figur 1 bei einem Sonderbetrieb.

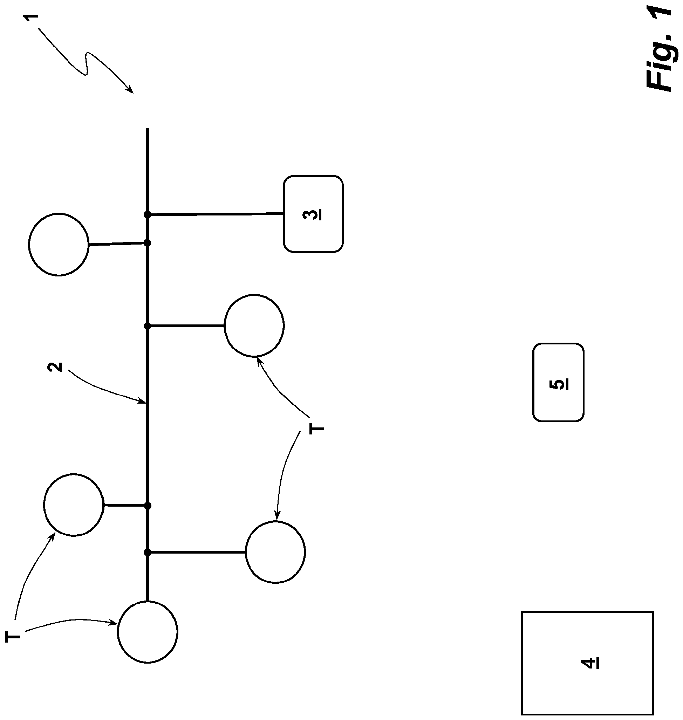

Ein Gebäudeinstallationssystem 1 umfasst eine Vielzahl von Netzteilnehmern, von denen in der Figur 1 einige wenige Netzteilnehmer T dargestellt sind. Diese sind an einen Installationsbus 2 angeschlossen und können über diesen kommunizieren. Bei den Netzteilnehmern T handelt es sich um Sensoren, Aktoren sowie Steuergeräte und dergleichen. Neben den Netzteilnehmern T ist in das Gebäudeinstallationssystem 1 auch ein Medienkoppler 3 integriert. Der Medienkoppler 3 dient als Schnittstelle zwischen einer Kommunikation auf dem drahtgebundenen Installationsbus 2 und einer funkbasierten Kommunikation zu weiteren Netzteilnehmern, die über den drahtgebundenen Installationsbus 2 nicht erreicht werden können. Beispielhaft ist in Figur 1 als solcher Netzteilnehmer ein Endgerät 4 dargestellt. Das Endgerät 4 ist über eine Funkstrecke an die Netzkommunikation angeschlossen und kann auf direktem Wege von dem Medienkoppler 3 auf der Funkstrecke nicht erreicht werden. Aus diesem Grunde ist in die Funkstrecke von dem Medienkoppler 3 zu dem Endgerät 4 ein Repeater 5 als Übertragungsgerät eingeschaltet. Es ist durchaus möglich, dass auf einer solchen Funkstrecke auch mehrere oder auch keine Repeater eingeschaltet sind, wenn dieses nicht erforderlich ist.

Bei dem dargestellten Gebäudeinstallationssystem 1 handelt es sich um ein solches, welches den KNX-Standard verwendet. Die Ausführungen zu diesem Ausführungsbeispiel gelten gleichermaßen auch für andere Installationssysteme, die mit einem anderen Kommunikationsstandard arbeiten.

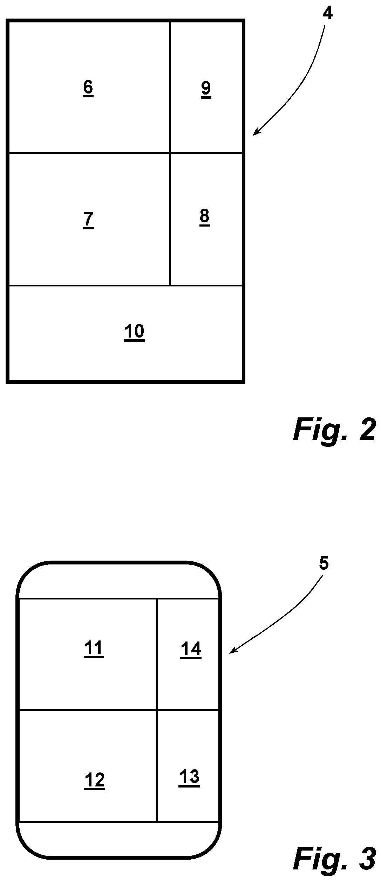

Das Endgerät 4, bei dem es sich letztendlich um jeden beliebigen Sensor oder Aktor handeln kann, umfasst ein Empfangsmodul 6 zum Empfangen von Daten auf der Funkstrecke (s. Figur 2). Das Endgerät 4 verfügt des Weiteren über ein Sendemodul 7, mit dem Daten von dem Endgerät 4 über die Funkstrecke an den Medienkoppler 3 und darüber in den Installationsbus 2 zu den daran angeschlossenen Netzteilnehmern T gesendet werden können. Zur Verdeutlichung der Funktionsweise ist das Sendemodul 7 als von dem Empfangsmodul 6 separates Modul in den Figuren dargestellt. In den meisten Fällen sind das Empfangsmodul und das Sendemodul in einem Modul vereint. Das Endgerät 4 unterliegt ebenso wie das Sendemodul des Medienkopplers 3 der gesetzlich begrenzten Sendezeit, dem sogenannten Duty-Cycle. Aus diesem Grunde verfügt das Endgerät 4 über eine Duty-Cycle-Überwachung 8, durch die die Sendetätigkeit abgebrochen wird, sobald der Duty-Cycle, also die maximale Sendedauer erreicht wird. Der Duty-Cycle ist bei dem von dem KNX-Standard benutzten Frequenzband von 868,3 MHz 36 Sekunden pro Stunde. Der Duty-Cycle ist ausreichend, damit bei einem Normalbetrieb des Gebäudeinstallationssystems 1 die erforderlichen Daten auf der Funkstrecke ohne Einschränkung übertragen werden können. Das Endgerät 4 umfasst des Weiteren eine Steuereinheit 9, mit der die auf der Funkstrecke empfangenen Daten ausgewertet und die sich daraus für das Endgerät 4 ergebenden Befehle umgesetzt werden. Entsprechend der in Form von Telegrammen empfangenen Befehle wird von der Steuereinheit 9 die Sensorik und Aktorik 10 des Endgerätes 4 angesteuert. Die Steuereinheit 9 kann auch die Aufgabe der Duty-Cycle-Überwachung übernehmen.

Der schematisiert in Figur 3 dargestellte Repeater 5 ist ähnlich aufgebaut, verfügt jedoch im Unterschied zu dem Endgerät 4 nicht über eine separate Aktorik. Somit ist Teil des Repeaters 5 ebenfalls ein Empfangsmodul 11, ein Sendemodul 12, eine Duty-Cycle-Überwachung 13 sowie eine Steuereinheit 14. Ebenso wie bei dem Endgerät 4 können auch bei dem Repeater 5 das Empfangsmodul und das Sendemodul in einem gemeinsamen Modul angeordnet sein und die Steuereinheit 14 die Aufgabe der Duty-Cycle-Überwachung übernehmen.

Der Medienkoppler 3 weist ebenfalls eine Duty-Cycle-Überwachung auf, wie dieses vorstehend zu dem Endgerät 4 bzw. Repeater 5 beschrieben ist. Damit verfügt auch der Medienkoppler 3 über ein Sende-Empfangsmodul und eine Duty-Cycle-Überwachung, die durchaus durch die Steuereinheit realisiert sein kann. Die Arbeitsweise des Medienkopplers 3 ist in Bezug auf die Deaktivierung und Aktivierung der Duty-Cycle-Überwachung genauso aufgebaut und arbeitet genauso wie dieses vorstehend bezüglich des Repeaters 5 beschrieben ist.

Die Steuereinheit 14 des Repeaters 5 und auch diejenige des Medienkopplers 3 ist eingerichtet, um ein von dem Endgerät 4 empfangenes Datentelegramm daraufhin auslesen zu können, ob darin eine Information über einen Sonderbetrieb, wie beispielsweise Wartungs- oder Diagnosearbeiten, enthalten ist.

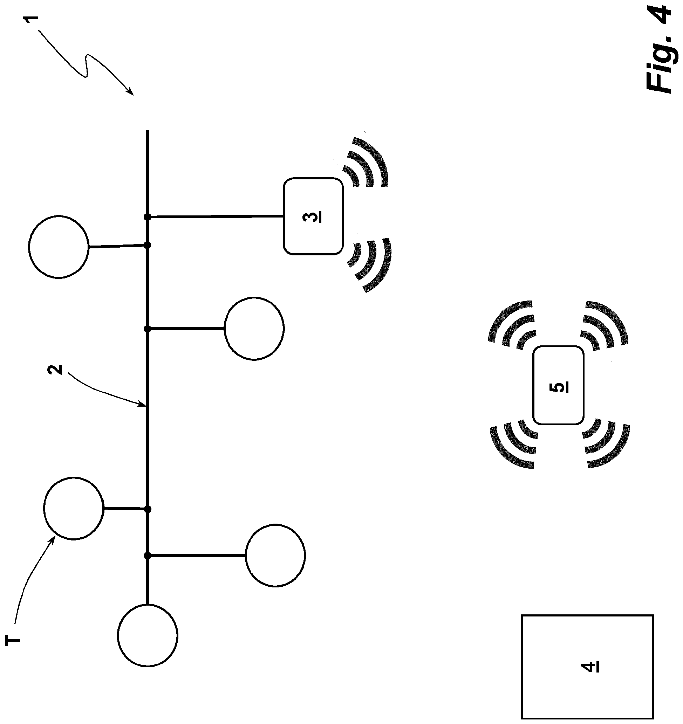

Figur 4 zeigt den Betrieb des Gebäudeinstallationssystem 1 bei einem Normalbetrieb, wenn beispielsweise der darin gekennzeichnete Teilnehmer T das Endgerät 4 ansteuern möchte. Ein diesbezüglich von dem Teilnehmer T gesendetes Telegramm wird über den Installationsbus 2 an den Medienkoppler 3 übertragen, der das auf der Drahtstrecke des Installationsbus 2 empfangene Telegramm auf der Funkstrecke weiter sendet. Das gesendete Telegramm wird von dem Repeater 5 empfangen, der dieses erneut aussendet, sodass das von dem Teilnehmer T gesendete Telegramm schließlich von dem Endgerät 4 empfangen werden kann. Dieses führt dann die gewünschte Aktion aus. Gegebenenfalls sendet das Endgerät 4 ein Bestätigungssignal, dass das von dem Teilnehmer T gesendete Telegramm empfangen und der oder die darin enthaltenen Befehle umgesetzt worden sind. Dieses von dem Endgerät 4 gesendete Telegramm wird von dem Repeater 5 empfangen, erneut ausgesendet, sodass dieses sodann von dem Medienkoppler 3 empfangen und über den Installationsbus 2 an den Teilnehmer T übertragen wird.

Die Sendekommunikation wird dabei von der Duty-Cycle-Überwachung des Endgerätes 4 und des Repeaters 5 sowie derjenigen des Medienkopplers 3 überwacht. Überschreitet die kumulative Sendezeit den durch die Duty-Cycle-Überwachung festgelegten Schwellwert innnerhalb der vorgegebenen Zeitspanne (beispielsweise 36 Sekunden innerhalb einer Stunde), wird der Sendebetrieb bis zum Beginn der nächsten Zeiteinheit abgebrochen.

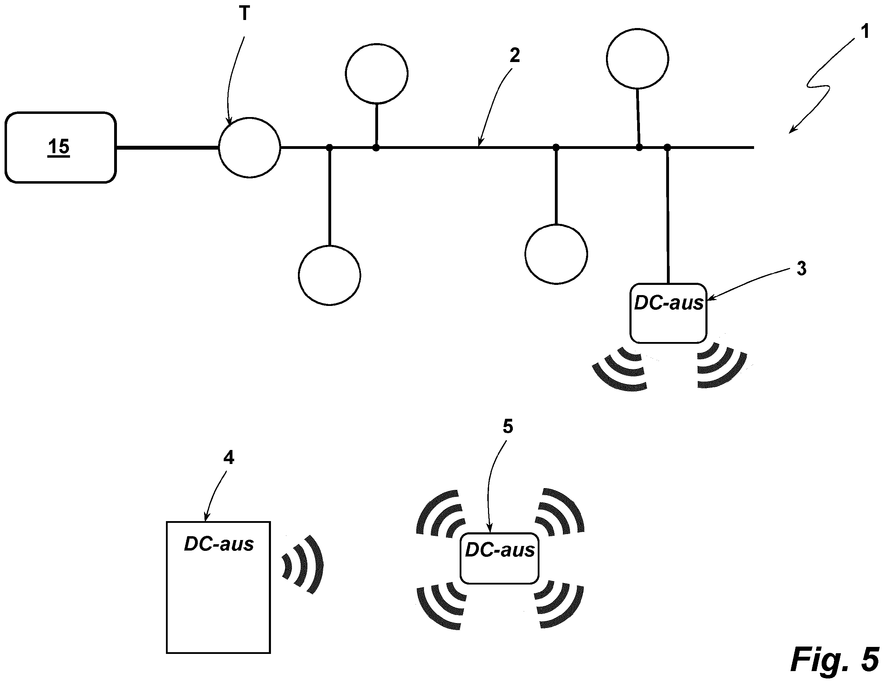

Figur 5 zeigt einen Betrieb des Gebäudeinstallationssystems 1 in einem Sonderbetriebsmodus. Angeschlossen an den Installationsbus 2 über einen Teilnehmer T ist für diese Zwecke ein Verwaltungsgerät 15. Bei dem Verwaltungsgerät 15 kann es sich beispielsweise um einen tragbaren PC oder dergleichen mit einer Installationssoftware handeln. Im vorliegenden Fall handelt es sich um einen PC. In dem in Figur 5 gezeigten Sonderbetriebsmodus ist vorgesehen, dass an dem Endgerät 4 Wartungs- und Diagnosearbeiten durchgeführt werden sollen und ein Softwareupdate an das Endgerät 4 übertragen werden soll. Zu diesem Zweck sendet das Verwaltungsgerät 15 zunächst über den Installationsbus 2 ein entsprechendes Telegramm an das Endgerät 4, das von dem Medienkoppler 3 über die Funkstrecke über den Repeater 5 an das Endgerät 4 übertragen wird. Die Steuereinheit 9 des Endgerätes 4 erkennt die in dem Telegramm enthaltene Information, dass die empfangenen Daten keine Daten eines Normalbetriebs sind, sondern dass es sich hierbei um Sonderbetriebsdaten handelt. Die Steuereinheit 9 des Endgerätes 4 schaltet dieses sodann in einen Sonderbetriebsmodus um.

Dieser Sonderbetriebsmodus umfasst, dass die Duty-Cycle-Überwachung 8 deaktiviert wird. In diesem Sonderbetriebsmodus sendet das Endgerät 4 ferner ein Telegramm mit der Information über den Sonderbetrieb, das von dem Repeater 5 empfangen und an den Medienkoppler 3 weitergeleitet wird. Dieses von dem Endgerät 4 als Broadcast abgesetzte Telegramm wird von der Steuereinheit 14 des Repeaters 5 erkannt, woraufhin die Steuereinheit 14 des Repeaters 5 diesen sodann ebenfalls in einen Sonderbetriebsmodus schaltet, bei dem die Duty-Cycle-Überwachung 13 deaktiviert ist. Folglich ist der Repeater 5 dann nicht mehr an die Sendezeitbegrenzung gebunden, sodass auch größere Datenmengen ohne Unterbrechung auf der Funkstrecke über den Repeater 5 übertragen werden können. Dieses gilt in beiden Übertragungsrichtungen, wobei jedoch die Übertragungsrichtung von dem Medienkoppler 3 über den Repeater 5 zum Endgerät 4 die bei den in diesem Beispielsfall durchzuführenden Arbeiten relevante Übertragungsrichtung in Bezug auf das zu übertragende Datenvolumen ist. Aufgrund seiner Eigenschaft als Repeater 5 sendet er das von dem Endgerät 4 empfangenen Telegramm, das daraufhin auch von dem Medienkoppler 3 empfangen wird. Dessen Steuereinheit deaktiviert sodann auch seine Duty-Cycle-Überwachung.

Bei dem beschriebenen Gebäudeinstallationssystem 1 wird bei den bezüglich ihrer Duty-Cycle-Überwachung angesprochenen Netzteilnehmern - dem Medienkoppler 3, dem Endgerät 4 und dem Repeater 5 - mit der Deaktivierung der Duty-Cycle-Überwachung ein Timer gesetzt, nach dessen Ablauf das jeweilige Gerät wieder seine Duty-Cycle-Überwachung aktiviert. Bei dem dargestellten Ausführungsbeispiel ist als Time-Out eine Zeitspanne von 3 Min. vorgegeben.

Zur Sicherstellung, dass sowohl der Repeater 5 als auch der Medienkoppler 3 das von dem Endgerät 4 als Broadcast gesendete Telegramm mit der Information über den Sonderbetrieb empfangen haben, sendet bei dem dargestellten Ausführungsbeispiel das Endgerät 4 dieses Telegramm mehrfach zyklisch wiederholt aus. Dabei ist vorgesehen, dass eine erste Wiederholung dieses Telegramms bereits vor Ablauf der aktuellen Zeitspanne der Duty-Cycle-Überwachung von dem Repeater 5 und dem Medienkoppler 3 erfolgt. Dabei wird von jedem, dieses Telegramm erhaltenden Übertragungsgerät, wie beispielsweise dem Repeater 5 oder dem Medienkoppler 3 der Timer neu gestartet, sodass die vorgegebene Time-Out-Zeit von neu zu laufen beginnt. Auf diese Weise kann die Funkübertragungsstrecke trotz einer automatischen Aktivierung des Duty-Cycles für die benötigte Zeitdauer einer Datenübertragung offen gehalten werden.

Sind die Sonderbetriebsarbeiten ausgeführt, wird das Verwaltungsgerät 15 von dem Installationsbus 2 bzw. dem Teilnehmer T getrennt und das Endgerät 4 arbeitet anschließend wieder in seinem Normalmodus. Spätestens nach Ablauf der Time-Out-Zeit in dem Medienkoppler 3, und dem Repeater 5 ist in diesen Geräten ebenfalls der Duty-Cycle wieder aktiviert.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen beschrieben werden müsste.

### Bezugszeichenliste

- 1: Gebäudeinstallationssystem
- 2: Installationsbus
- 3: Medienkoppler
- 4: Endgerät
- 5: Repeater
- 6: Empfangsmodul
- 7: Sendemodul
- 8: Duty-Cycle-Überwachung
- 10: Aktorik
- 11: Empfangsmodul
- 12: Sendemodul
- 13: Duty-Cycle-Überwachung
- 14: Steuereinheit
- 15: Verwaltungsgerät

- T: Netzteilnehmer

## Patentansprüche

1. Verfahren zum Übertragen von nicht zu einem Normalbetrieb gehörenden Daten innerhalb eines zumindest teilweise funkbasierten Gebäudeinstallationssystems (1), bei dem wenigstens ein Teilnehmer über eine funkbasierte Netzkommunikation in das Gebäudeinstallationssystem (1) eingebunden ist, **dadurch gekennzeichnet, dass** ein über eine Funkstrecke des Gebäudeinstallationssystems (1) von einem Verwaltungsgerät (15) angesprochener Teilnehmer als Endgerät (4) nach Empfang eines Sonderbetriebsbefehls, wenn nicht über die Funkstrecke an die Netzkommunikation angeschlossen, ein Telegramm mit der Information über den Sonderbetrieb sendet, woraufhin das oder die dieses Telegramm empfangenden, an der Funkübertragung an das zumindest eine Endgerät (4) beteiligten Übertragungsgeräte, wie Repeater, Medienkoppler und dergleichen (3, 5) ihre Duty-Cycle-Überwachung deaktivieren, und, wenn funkbasiert an die Netzkommunikation angeschlossen ist, dieses Endgerät (4) zudem seine Duty-Cycle-Überwachung deaktiviert, sodass eine Übertragung auch größerer Datenmengen an dieses zumindest eine Endgerät (4) auf der Funkstrecke unterbrechungsfrei erfolgen kann.

2. Verfahren nach Anspruch 1, **dadurch gekennzeichnet, dass** als Sonderbetriebsbefehl eine Inbetriebnahme des Endgerätes (4), eine Sonder- oder Zusatzinstallation desselben, ein Update oder Wartungs- oder Diagnosearbeiten vorgesehen sind.

3. Verfahren nach Anspruch 1 oder 2, **dadurch gekennzeichnet, dass** das Endgerät das Telegramm mit der Information über den Sonderbetrieb zyklisch wiederholend sendet.

4. Verfahren nach einem der Ansprüche 1 bis 3, **dadurch gekennzeichnet, dass** die Duty-Cycle-Überwachung in den an der Funkübertragung zu dem zumindest einen Endgerät (4) beteiligten Übertragungsgeräten, wie Repeatern, Medienkoppler und dergleichen (3, 5) nach Empfang eines von dem Endgerät (4) gesendeten Telegramms mit der Information über eine Beendigung des Sonderbetriebes wieder aktiviert wird.

5. Verfahren nach einem der Ansprüche 1 bis 3, **dadurch gekennzeichnet, dass** das Telegramm mit der Information über den Sonderbetrieb eine Zeitinformation enthält, für wie lange die Duty-Cycle-Überwachung deaktiviert werden soll.

6. Verfahren nach Anspruch 5, **dadurch gekennzeichnet, dass** mit dem Empfang eines Telegramms mit der Information über den Sonderbetrieb und dem Deaktivieren der Duty-Cycle-Überwachung in dem zumindest einen an der Funkübertragung zu dem zumindest einen Endgerät beteiligten Übertragungsgerät, wie Repeater, Medienkoppler und dergleichen (3, 5) ein Timer mit einer vorgegebenen Time-Out-Zeit gesetzt wird, nach dessen Ablauf die Duty-Cycle-Überwachung wieder aktiviert wird.

7. Verfahren nach einem der Ansprüche 1 bis 5, **dadurch gekennzeichnet, dass** mit dem Empfang eines Sonderbetriebsbefehls in dem Endgerät (4) ein Timer mit einer vorgegebenen Time-Out-Zeit gesetzt wird, nach dessen Ablauf die Duty-Cycle-Überwachung wieder aktiviert wird.

8. Verfahren nach einem der Ansprüche 1 bis 7, **dadurch gekennzeichnet, dass** in die Funkstrecke zum Erreichen des zumindest einen Endgerätes (4) ein oder mehrere Repeater (5 eingeschaltet sind.

9. Verfahren zum Übertragen von nicht zu einem Normalbetrieb gehörenden Daten innerhalb eines zumindest teilweise funkbasierten Gebäudeinstallationssystems (1), bei dem wenigstens ein Teilnehmer über eine funkbasierte Netzkommunikation in das Gebäudeinstallationssystem (1) eingebunden ist, **dadurch gekennzeichnet, dass** ein oder mehrere oder alle an der Funkübertragung an das zumindest eine die funkbasierende Netzwerkkommunikation als Teilnehmer in das Gebäudeinstallationssystem (1) eingebundene Endgerät (4) beteiligten Übertragungsgeräte, wie Repeater, Medienkoppler und dergleichen (3, 5) ihre Duty-Cycle-Überwachung deaktivieren, wenn sich aus einem oder mehreren zusammenhängenden, weiterzuleitenden Datentelegrammen ergibt, dass es sich um Befehle eines Sonderbetriebs handelt.

10. Verfahren nach Anspruch 9, **dadurch gekennzeichnet, dass** ein solches in die Funkstrecke an das zumindest eine Endgerät (4) eingeschaltete Übermittlungsgerät (3, 5) seine Duty-Cycle-Überwachung deaktiviert, wenn die übertragene Datenmenge einen vorbestimmten Stellwert überschritten hat.

11. Verfahren nach Anspruch 9, **dadurch gekennzeichnet, dass** ein solches in die Funkstrecke an das zumindest eine Endgerät (4) eingeschaltete Übermittlungsgerät (3, 5) seine Duty-Cycle-Überwachung deaktiviert, wenn in dem Datentelegramm eine Häufung von Daten mit einer Punkt-zu-Punkt-Adressierung enthalten ist.

12. Verfahren nach Anspruch 9, **dadurch gekennzeichnet, dass** ein solches in die Funkstrecke an das zumindest eine Endgerät (4) eingeschaltete Übermittlungsgerät (3, 5) seine Duty-Cycle-Überwachung deaktiviert, wenn ein Datenstrom mit einem Duty-Cycle oberhalb eines Grenzwertes von oder zu dem zumindest einen Endgerät (4) von einem solchen Übertragungsgerät (3, 5) empfangen worden ist.

13. Verfahren nach einem der Ansprüche 9 bis 12, **dadurch gekennzeichnet, dass** dieses mit den Merkmalen eines oder mehrerer der Ansprüche 1 bis 8 durchgeführt wird.

14. Verfahren nach einem der Ansprüche 1 bis 13, **dadurch gekennzeichnet, dass** bei Feststellen einer unvollständigen Umsetzung des Sonderbetriebsbefehls durch ein Endgerät (4) dieses von dem Endgerät (4) gemeldet wird und nach Empfang dieses Befehls von einem Verwaltungsgerät (15) dieses einen Fehlerbehebungsbefehl an dieses Endgerät (4) sendet.

15. Verfahren nach einem der Ansprüche 1 bis 14, **dadurch gekennzeichnet, dass** der unerwartete Empfang eines von einem Endgerät gesendeten Telegramms mit der Information über den Sonderbetrieb durch das Verwaltungsgerät (15) diesen Empfang als Fehlermeldung bewertet und von dem Verwaltungsgerät (15) eine Funktionsüberprüfung dieses Endgerätes veranlasst wird.

16. Gebäudeinstallationssystem mit einen Verwaltungsgerät (15) und mit mehreren Netzteilnehmern (T), von denen zumindest ein Endgerät (4) in das Gebäudeinstallationssystem (1) über eine Funkstrecke zwischen dem Verwaltungsgerät (15) und dem Endgerät (4) unter Beteiligung zumindest eines an der Funkübertragung beteiligten Übertragungsgerätes, etwa einen Medienkoppler (3) oder einen Repeater (5) integriert ist, welches Gebäudeinstallationssystem (1) insbesondere eingerichtet ist, das Verfahren nach einem der Ansprüche 1 bis 15 auszuführen, **dadurch gekennzeichnet, dass** die Duty-Cycle-Überwachung dieses zumindest einen Teilnehmers als Endgerät (4) sowie die Duty-Cycle-Überwachung der an der Funkübertragung zu diesem Endgerät (4) beteiligten Übertragungsgeräte (3, 5) deaktivierbar sind.

17. Gebäudesintallationssystem nach Anspruch 16, **dadurch gekennzeichnet, dass** das zumindest eine Endgerät (4) eingerichtet ist, ein Telegramm mit der Information über einen Sonderbetrieb im Zusammenhang mit einer Deaktivierung seiner Duty-Cycle-Überwachung zu senden, und dass zumindest ein an der Funkübertragung zu diesem zumindest einen Endgerät (4) beteiligtes Übertragungsgerät (3, 5), etwa Medienkoppler (3) oder Repeater (5), eine Einrichtung zum Erkennen des Telegramms mit der Information über den Sonderbetrieb umfasst und eingerichtet ist, nach Empfang eines solchen Telegramms seine Duty-Cycle-Überwachung zu deaktivieren.

18. Gebäudeinstallationssystem nach Anspruch 16 oder 17, **dadurch gekennzeichnet, dass** das zumindest eine Übertragungsgerät (3, 5) über einen Time-Out-Timer verfügt, der bei Deaktivieren der Duty-Cycle-Überwachung gesetzt wird und durch den nach Ablauf des Timers die Duty-Cycle-Überwachung wieder aktiviert wird.

19. Gebäudeinstallationssystem nach einem der Ansprüche 16 bis 18, **dadurch gekennzeichnet, dass** eine erste Menge von Netzteilnehmern (T) über einen drahtgebundenen Installationsbus (2) und eine zweite Menge von Netzteilnehmern über eine Funkstrecke in das Gebäudeinstallationssystem (1) eingebunden sind und ein Medienkoppler (3) als Schnittstelle zwischen dem drahtgebundenen Installationsbus (2) und der Funkstrecke eingesetzt ist.

20. Gebäudeinstallationssystem nach einem der Ansprüche 16 bis 19, **dadurch gekennzeichnet, dass** in die Funkstrecke zu dem zumindest einen Endgerät (4) ein oder mehrere Repeater als Übertragungsgeräte (3, 5) eingeschaltet sind.

## Claims

1. Procedure for the transfer of data not belonging to a standard operation within an at least partially radio-based building installation system (1), in which at least one participant is integrated into the building installation system (1) via a radio-based network communication, **characterised by the fact** that a participant, adressed by an administration device (15) via a radio link of the building installation system (1), as terminal device (4), after having received a special operation command, if not connected to the network communication via the radio link, sends a telegram with information on the special operation, whereupon the transmission device or devices receiving this telegram and involved in the radio transmission to the at least one terminal device (4), such as repeaters, media couplers and the like (3, 5), deactivate their duty cycle monitoring, and, if connected to the network communication via radio, this terminal device (4) in addition deactivates its duty cycle monitoring, so that a transmission of even larger amounts of data to this at least one terminal device (4) can take place without interruption on the radio link.

2. Procedure in accordance with Claim 1, **characterised by the fact** that a commissioning of the terminal device (4), a special or additional installation of the same, an update or maintenance or diagnostic work are provided as special operation command.

3. Procedure in accordance with Claim 1 or 2, **characterised by the fact** that the terminal device sends the telegram with the information on the special operation in a cyclically repeating manner.

4. Procedure in accordance with any of Claims 1 to 3, **characterised by the fact** that the duty cycle monitoring in the transmission devices, such as repeaters, media couplers and the like (3, 5), involved in the radio transmission to the at least one terminal device (4), is reactivated after receipt of a telegram sent by the terminal device (4) with the information on a termination of the special operation.

5. Procedure in accordance with any of Claims 1 to 3, **characterised by the fact** that the telegram with the information about the special operation contains time information for how long the duty cycle monitoring is to be deactivated.

6. Procedure in accordance with Claim 5, **characterised by the fact** that, on receipt of a telegram with information on the special operation and the deactivation of the duty cycle monitoring in the at least one transmission device, such as repeater, media coupler and the like (3, 5), involved in the radio transmission to the at least one terminal device, a timer with a predetermined time-out time is set, after expiry of which the duty cycle monitoring is reactivated.

7. Procedure in accordance with any of Claims 1 to 5, **characterised by the fact** that on receipt of a special operation command in the terminal device (4) a timer with a predetermined time-out time is set, after expiry of which the duty cycle monitoring is reactivated.

8. Procedure in accordance with any of Claims 1 to 7, **characterised by the fact** that one or several repeaters (5) are switched into the radio link for reaching the at least one terminal device (4).

9. Procedure for the transfer of data not belonging to a standard operation within an at least partially radio-based building installation system (1), in which at least one participant is integrated into the building installation system (1) via a radio-based network communication, **characterised by the fact** that one or several or all transmission devices, such as repeaters, media couplers and the like (3, 5), participating in the radio transmission to the at least one terminal device (4) integrated as participant in the building installation system (1) via the radio-based network communication, deactivate their duty-cycle monitoring if one or several connected data telegrams to be passed on prove to be commands of a special operation.

10. Procedure in accordance with Claim 9, **characterised by the fact** that such a transmission device (3, 5) switched into the radio link to the at least one terminal device (4) deactivates its duty cycle monitoring if the amount of data transmitted has exceeded a predetermined control value.

11. Procedure in accordance with Claim 9, **characterised by the fact** that such a transmission device (3, 5) switched into the radio link to the at least one terminal device (4) deactivates its duty cycle monitoring if the data telegram contains an accumulation of data with point-to-point addressing.

12. Procedure in accordance with Claim 9, **characterised by the fact** that such a transmission device (3, 5) switched into the radio link to the at least one terminal device (4) deactivates its duty cycle monitoring if a data stream with a duty cycle above a limit value from or to the at least one terminal device (4) has been received by such a transmission device (3, 5).

13. Procedure in accordance with any of Claims 9 to 12, **characterised by the fact** that this is carried out with the features of one or several of claims 1 to 8.

14. Procedure in accordance with any of Claims 1 to 13, **characterised by the fact** that, if an incomplete implementation of the special operation command is detected by a terminal device (4), this is reported by the terminal device (4) and, after this command has been received by an administration device (15), the latter sends an error correction command to this terminal device (4).

15. Procedure in accordance with any of Claims 1 to 14, **characterised by the fact** that the unexpected receipt by the administration device (15) of a telegram sent by the terminal device with the information on the special operation, the administration device evaluates this receipt as error message and initiates a function check of this terminal device.

16. Building installation system with an administration device (15) and with several network participants (T), of which at least one terminal device (4) is integrated into the building installation system (1) via a radio link between the administration device (15) and the terminal device (4), under participation of at least one transmission device participating in the radio transmission, such as a media coupler (3) or a repeater (5), which building installation system (1) is particularly set up to carry out the procedure in accordance with any of the claims 1 to 15, **characterised by the fact** that the duty cycle monitoring of this at least one participant as terminal device (4) as well as the duty cycle monioring of the transmission devices (3, 5) participating in the radio transmission to this terminal device (4) can be deactivated.

17. Building installation system in accordance with Claim 16, **characterised by the fact** that the at least one terminal device (4) is set up to send a telegram with the information on a special operation in correlation with a deactivation of its duty cycle monitoring, and that at least one transmission device (3, 5) participating in the radio transmission to this at least one terminal device (4), such as a media coupler (3) or a repeater (5), comprises a unit for detection of the telegram with the information on the special operation and is set up to deactivate its duty cycle monitoring after receipt of such a telegram.

18. Building installation system in accordance with Claim 16 or 17, **characterised by the fact** that the at least one transmission device (3, 5) has a time-out timer, which is set with deactivation of the duty cycle monitoring and by which, when the timer has run up, the duty cycle monitoring is reactivated.

19. Building installation system in accordance with any of Claims 16 to 18, **characterised by the fact** that a first number of network participants (T) are integrated into the building installation system (1) via a wired installations bus (2) and a second number of network participants are integrated into the building installation system via a radio link, and a media coupler (3) is installed as interface between the wired installation bus (2) and the radio link.

20. Building installation system in accordance with any of Claims 16 to 19, **characterised by the fact** that one or several repeaters as transmission devices (3, 5) are switched into the radio link to the at least one terminal device (4).

## Revendications

1. Procès pour transmettre des données ne faisant pas partie d'un fonctionnement normal dans un système d'installation de bâtiment (1) basé au moins partiellement sur la radio, dans lequel au moins un abonné est intégré dans le système d'installation de bâtiment (1) par l'intermédiaire d'une communication de réseau basée sur la radio, **caractérisé en ce qu'**un abonné adressé par un appareil de gestion (15) par l'intermédiaire d'une liaison radio du système d'installation de bâtiment (1) envoie, en tant que terminal (4), après réception d'un ordre de fonctionnement spécial, si celui-ci n'est pas raccordé à la communcation de réseau par l'intermédiaire de la liaison radio, un télégramme contenant l'information sur le fonctionnement spécial, après quoi le ou les appareils de transmission, tels que des répéteurs, des coupleurs de médias et similaires (3, 5), recevant ce télégramme et participant à la transmission radio à l'au moins un terminal (4), désactivent leur surveillance du cycle d'utilisation et, si raccordé à la communication de réseau basée sur la radio, ce terminal (4) désactive en outre sa surveillance du cycle d'utilisation, de sorte qu'une transmission, même de quantités de données plus importantes, à cet au moins un terminal (4) peut s'effectuer sans interruption sur la liaison radio.

2. Procès selon la revendication 1, **caractérisé en ce qu'**une mise en service du terminal (4), une installation spéciale ou supplémentaire de celui-ci, une mise à jour ou des travaux de maintenance ou de diagnostic sont prévus comme ordre de fonctionnement spécial.

3. Procès selon la revendication 1 où 2, **caractérisé en ce que** le terminal envoie le télégramme avec l'information sur le fonctionnement spécial de manière cyclique et répétitive.

4. Procès selon l'une des revendications 1 à 3, **caractérisé en ce que** la surveillance du cycle d'utilisation dans les appareils de transmission, tels que des répéteurs, des coupleurs de médias et similaires (3, 5), participant à la transmission radio à l'au moins un terminal (4), est réactivée après réception d'un télégramme avec l'information d'une terminaison du fonctionnement spécial envoyé du terminal (4).

5. Procès selon l'une des revendications 1 à 3, **caractérisé en ce que** le télégramme avec l'information sur le fonctionnement spécial contient l'information de temps pour combient de temps la surveillance du cycle d'utilisation devrait être désactivée.

6. Procès selon la revendication 5, **caractérisé en ce que,** lors de la réception d'un télégramme avec l'information sur le fonctionnement spécial et la déactivation de la surveillance du cycle d'utilisation dans l'au moins un appareil de transmission, tel que répéteur, coupleur de médias et similaires (3, 5), participant à la transmission radio à l'au moins un terminal, une minuterie est définie avec une durée de time-out prédéfinie, après l'écoulement de laquelle la surveillance du cycle d'utilisation est à nouveau activée.

7. Procès selon l'une des revendications 1 à 5, **caractérisé en ce que** lors de la réception d'un ordre de fonctionnement spécial dans le terminal (4), une minuterie est définie avec une durée de time-out prédéfinie, après l'écoulement de laquelle la surveillance du cycle d'utilisation est à nouveau activée.

8. Procès selon l'une des revendications 1 à 7, **caractérisé en ce qu'**un ou plusieurs répéteurs (5) sont branchés dans la liaison radio pour atteindre l'au moins un terminal (4).

9. Procès de transmission de données ne faisant pas partie d'un fonctionnement normal dans un système d'installation de bâtiment (1) au moins partiellement basé sur la radio, dans lequel au moins un abonné est intégré dans le système d'installation de bâtiment (1) par communication de réseau basée sur la radio, **caractérisé en ce qu'**un ou plusieurs ou tous les appareils de transmission, tels que des répéteurs, des coupleurs de médias et similaires (3, 5), participant à la transmission radio vers l'au moins un terminal (4) intégré en tant qu'abonné dans le système d'installation de bâtiment (1) par communication de réseau basée sur la radio, désactivent leur surveillance du cycle d'utilisation lorsqu'il ressort d'un ou de plusieurs télégrammes de données cohérents à retransmettre qu'il s'agit d'ordres d'un fonctionnement spécial.

10. Procès selon la revendication 9, **caractérisé en ce qu'**un tel appareil de transmission (3, 5) connecté dans la liaison radio vers l'au moins un terminal (4) désactive sa surveillance du cycle d'utilisation lorsque la quantité de données transmises a dépassé une valeur de réglage prédéterminée.

11. Procès selon la revendication 9, **caractérisé en ce qu'**un tel appareil de transmission (3, 5) connecté dans la liaison radio vers l'au moins un terminal (4) désactive sa surveillance du cycle d'utilisation lorsque le télégramme de données contient une accumulation de données avec un adressage point à point.

12. Procès selon la revendication 9, **caractérisé en ce qu'**un tel appareil de transmission (3, 5), connecté dans la liaison radio vers l'au moins un terminal (4), désactive sa surveillance du cycle d'utilisation lorsqu'un flux de données ayant un cycle d'utilisation supérieur à une valeur limite a été reçu par ou vers ledit au moins un terminal (4) à partir d'un tel appareil de transmission (3, 5).

13. Procès selon l'une des revendications 9 à 12, **caractérisé en ce que** le prédit est réalisé avec les caractéristiques d'une ou plusieurs des revendications 1 à 8.

14. Procès selon l'une des revendications 1 à 13, **caractérisé en ce que** lorsqu'une mise en oeuvre incomplète de l'ordre de fonctionnement spécial par un terminal (4) est constatée, celle-ci est signalée par le terminal (4) et, après réception de cet ordre par un appareil de gestion (15), celui-ci envoie un ordre de correction d'erreur à ce terminal (4).

15. Procès selon l'une des revendications 1 à 14, **caractérisé en ce que** la réception inattendue par l'appareil de gestion (15) d'un télégramme envoyé par un terminal avec l'information sur le fonctionnement spécial, l'appareil de gestion (15) évalue cette réception comme un message d'erreur et déclenche un contrôle du fonctionnement de ce terminal (4).

16. Système d'installation de bâtiment avec un appareil de gestion (15) et avec plusieurs abonnés au réseau (T), dont au moins un terminal (4) est intégré dans le système d'installation de bâtiment (1) par l'intermédiaire d'une liaison radio entre l'appareil de gestion (15) et le terminal (4) avec la participation d'au moins un appareil de transmission participant à la transmission radio, par exemple un coupleur de médias (3) ou un répéteur (5), lequel système d'installation de bâtiment (1) est notammant conçu pour mettre en oeuvre le procès selon l'une des revendications 1 à 15, **caractérisé en ce que** la surveillance du cycle d'utilisation de cet au moins un abonné en tant que terminal (4) ainsi que la surveillance du cycle d'utilisation des appareils de transmission (3, 5) participant à la transmission radio vers ce terminal (4) peuvent être désactivées.

17. Système d'installation de bâtiment selon la revendication 16, **caractérisé en ce que** l'au moins un terminal (4) est conçu pour envoyer un télégramme avec l'information sur un fonctionnement spécial en relation avec une désactivation de sa surveillance du cycle d'utilisation, et **en ce qu'**au moins un appareil de transmission (3, 5), par exemple un coupleur de médias (3) ou un répéteur (5), participant à la transmission radio vers cet au moins un terminal (4), comprend un dispositif pour reconnaître le télégramme avec l'information sur le fonctionnement spécial et est conçu pour désactiver sa surveillance du cycle d'utilisation après réception d'un tel télégramme.

18. Système d'installation de bâtiment selon la revendication 16 ou 17, **caractérisé en ce que** l'au moins un appareil de transmission (3, 5) dispose d'une minuterie time-out qui est activée lors de la désactivation de la surveillance du cycle d'utilisation et par laquelle la surveillance du cycle d'utilisation est réactivée après l'expiration de la minuterie.

19. Système d'installation de bâtiment selon l'une des revendications 16 à 18, **caractérisé en ce qu'**un premier ensemble d'abonnés au réseau (T) est intégré dans le système d'installation de bâtiment (1) par l'intermédiaire d'un bus d'installation filaire (2) et un deuxième ensemble d'abonnés au réseau est intégré dans le système d'installation de bâtiment (1) par l'intermédiaire d'une liaison radio, et un coupleur de médias (3) est utilisé comme interface entre le bus d'installation filaire (2) et la liaison radio.

20. Système d'installation de bâtiment selon l'une des revendications 16 à 19, **caractérisé en ce qu'**un ou plusieurs répéteurs sont insérés dans la liaison radio vers l'au moins un terminal (4) en tant qu'appareils de transmission (3, 5).
